## Europäisches Patentamt
## European Patent Office
## Office européen des brevets

(19)

(11) Veröffentlichungsnummer: **0 022 120**
**B1**

(12) **EUROPÄISCHE PATENTSCHRIFT**

(45) Veröffentlichungstag der Patentschrift:
**16.06.82**

(51) Int. Cl.³: **C 02 F 3/28**, B 01 D 17/04

(21) Anmeldenummer: **80890054.2**

(22) Anmeldetag: **13.05.80**

(54) Verfahren zum Spalten und Aufarbeiten von Emulsionen von Ölen und Fetten.

(30) Priorität: **28.06.79 AT 4556/79**

(43) Veröffentlichungstag der Anmeldung:
**07.01.81 Patentblatt 81/1**

(45) Bekanntmachung des Hinweises auf die Patenterteilung:
**16.06.82 Patentblatt 82/24**

(84) Benannte Vertragsstaaten:
**BE DE FR LU NL SE**

(56) Entgegenhaltungen:
**FR-A-2 041 483**
**GB-A-2 007 205**
**US-A-1 753 641**
**US-A-4 022 665**

(73) Patentinhaber: **VOEST-ALPINE Aktiengesellschaft, Friedrichstrasse 4, A-1011 Wien (AT)**

(72) Erfinder: **Treso, Bertalan, Kunigundenweg 119, A-8707 Leoben (AT)**
Erfinder: **Hanke, Reinhart, Dipl.-Ing., Annaberggasse 2, A-8700 Leoben (AT)**

(74) Vertreter: **Kretschmer, Adolf, Dipl.-Ing., Schottengasse 3a, A-1014 Wien (AT)**

## Verfahren zum Spalten und Aufarbeiten von Emulsionen von Ölen und Fetten.

Die Erfindung bezieht sich auf ein Verfahren zum Spalten und Aufarbeiten von Emulsionen von Ölen und Fetten, insbesondere von synthetischen Ölen, wie beispielsweise Schneid-, Kühl- und Schmierflüssigkeit und schwefel- bzw. chloridsalzhaltigen Ölen, gegebenenfalls in Gegenwart von Emulgatoren sowie gebrauchten Waschlaugen und Entfettungsbädern, wobei die Emulsionen gemeinsam mit Abwasserschlämmen aufgearbeitet werden. Zum Spalten derartiger Emulsionen, welche vom Typ Öl in Wasser als auch vom Typ Wasser in Öl sein können, ist es üblich, chemische bzw. elektrochemische Verfahren anzuwenden. Vor allem die elektrolytische Spaltung von Ölemulsionen stellt ein weit verbreitetes Verfahren für die Aufarbeitung von Ölemulsionen dar. Besonders bei nitrithältigen und phosphathältigen Emulsionen gestaltet sich die nachfolgende Aufarbeitung äusserst schwierig. Es ist bereits bekannt, Ölemulsionen mit Hilfe von Mikroorganismen zu spalten (US-A-1 753 641) und eine anaerobe Fermentation von Abfallschlamm in 2 getrennten Stufen, in einer ersten sauren Stufe und in einer zweiten $CH_4$ bildenden Stufe vorzunehmen (US-A-4 022 665). Aus der GB-A-2 007 205 ist es bereits bekannt, Emulsionen gleichzeitig mit Schlämmen aufzuarbeiten, jedoch wurde solchen Verfahren eine bedeutende Verlängerung der Behandlungszeit beobachtet, da die eingebrachten Emulsionen offensichtlich die Tätigkeit der Bakterien beeinträchtigen.

Die Erfindung zielt nun darauf ab, ein besonders einfaches und effektives Verfahren zur Spaltung und Aufarbeitung solcher Emulsionen zu schaffen, welches mit geringem Energieverbrauch durchgeführt werden kann und eine einfache Abtrennung von Ölen und anderen Schadstoffen aus Abwässern erlaubt. Zur Lösung dieser Aufgabe ist die Erfindung dadurch gekennzeichnet, dass einem Faulschlamm oder Schlammwasser, beispielsweise aus einer biologischen Abwasserreinigung, nach einer ersten Phase des Fäulnisprozesses, in welcher vor allem eine saure Gärung durchgeführt wird und insbesondere organische Säuren und $CO_2$ anfallen, die zu spaltende und aufzuarbeitende Emulsion zugesetzt und diese Mischung einer zweiten Phase des Fäulnisprozesses unter anaeroben Bedingungen unterworfen wird, wobei in der zweiten Phase in einem von der ersten Phase verschiedenen Milieu vor allem Methan entwickelt wird, und dass die beiden Phasen des Fäulnisprozesses in zwei verschiedenen Faulbehältern durchgeführt werden und die aufzuarbeitende Emulsion dem zweiten Faulbehälter zugeführt wird. Unter Faulschlamm wird hiebei eine in anaerober Umsetzung befindliche oder anaerob stabilisierte organische Substanz, deren Wassergehalt vorzugsweise über 90 Gew.-% liegt, insbesondere im Faulen befindlicher oder ausgefaulter Schlamm aus biologischen Kläranlagen, verstanden. Überschussschlamm muss ebenso wie der vor dem sogenannten Belebungsbecken einer biologischen Abwasserreinigung anfallende Schlamm in geeigneter Weise vernichtet werden, wofür üblicherweise bei biologischen, insbesondre mikrobakteriellen, Reinigungsverfahren die Schlämme einem Fäulnisprozess, einem Eindikken, Flocken, Entwässern oder Trocknen unterworfen werden. Die gewonnenen Produkte können nachfolgend verbrannt werden. Alternativ ist auch eine Kompostierung mit Kohlenstoffträgern, eine Rückgewinnung von Metallen aus der Asche und eine aerobe Fermentation und Trocknung für die Weiterverarbeitung der Schlämme möglich. Es hat sich nun überraschenderweise gezeigt, dass die Zufuhr von Ölemulsionen zu faulendem Schlamm nach einer ersten Phase des Fäulnisprozesses, in welcher vor allem eine saure Gärung durchgeführt wird und insbesondere organische Säuren und $CO_2$ anfallen, eine rasche Spaltung der Emulsionen bewirkt. Die in den Emulsionen enthaltenen Emulgatoren, welche die dispergierte hydrophobe Phase stabil halten und eine Koagulation verhindern, werden offensichtlich durch Faulschlämme biochemisch inaktiviert und es kommt in der Folge zu einer raschen Adsorption der Öle bzw. Fette an den Schlammflocken. Der Schlamm bleibt hiebei biologisch aktiv und kann nach erfolgter Spaltung der zugeführten Emulsion neuerlich beladen werden. Die Biozönose solcher Faulschlämme nach der genannten ersten Phase des Fäulnisprozesses erlaubt hiebei überraschenderweise den Abbau von üblicherweise sehr schwer eliminierbaren Verunreinigungen, wie beispielsweise von Nitriten und Phosphaten, sodass das abgezogene Wasser frei von solchen Verunreinigungen wird. Dieser Abbau der dem Schlamm in Form von Emulsionen zugesetzten Schadstoffe, sowie der Öle und Fette selbst, erfolgt unter besonders günstigen Bedingungen dann, wenn die aufzuarbeitende Emulsion einem Faulbehälter für die Faulung des Überschussschlammes einer biologischen Abwasserreinigungsanlage nach einer Vorfaulung dieses Schlammes zugeführt wird. Nach einer Vorfaulung des Schlammes ergibt sich offensichtlich eine Phase der erhöhten Adaptationsfähigkeit der anaerob tätigen Mikrobakterien, welche das ihnen in Form der Emulsion angebotene Nährsubstrat ohne weiteres biologisch abzubauen erlaubt. Es wird daher das erfindungsgemässe Verfahren so durchgeführt, dass der Fäulnisprozess im Faulbehälter in zwei Phasen unterteilt durchgeführt wird, wobei in einer ersten Phase vor allem eine saure Gärung durchgfführt wird und insbesondere organische Säuren und $CO_2$ anfallen, hierauf Emulsion zugeführt und in der zweiten Phase in einem von der ersten Phase verschiedenen Milieu vor allem Methan entwickelt wird. Durch Zufügung der Emulsion am Ende dieser ersten Phase oder in unmittelbarem Anschluss an diese erste Phase wird eine vollständige Spaltung und eine weitgehend vollständige Aufarbeitung der Emulsion ermöglicht. Dadurch, dass die beiden Phasen des Fäulnisprozesses in zwei verschiedenen Fäulnisbehältern durchgeführt werden, wobei Emulsion dem zweiten Fäulnisbehälter zugeführt wird, ergibt sich eine klare Trennung der in den beiden Phasen vorherrschenden Milieus und es kann sichergestellt werden, dass die Emulsion erst zu einem Zeitpunkt mit dem Faulschlamm in Kontakt gebracht wird, zu welchem eine Verlangsamung des Fäulnisprozesses durch Zusatz der Emulsionen nicht mehr beobachtet werden kann. Die erste Phase kann daher unbeeinflusst von Emulsionszusätzen ablaufen und die Biozönose des in die zweite Fäulnisphase übergehenden Faulschlammes weist die beste Adaptationsfähigkeit für die Aufarbeitung der Emulsionen auf. Überraschenderweise hat sich gezeigt, dass in diesen Fällen Nitrite durch die Biomasse des Faulschlammes, insbesondere durch Nitrobakter ohne Ammoniumzufuhr, abgebaut werden. Da die Faulung des Schlammes als Teilschritt eines biologischen Abwasserreinigungsverfahrens in üblichen biologischen Reinigungsanlagen durchgeführt wird, sind für das erfindungsgemässe Verfahren keine neuen Anlagen erforderlich und es kann daher in überaus wirtschaftlicher Weise eine Aufarbeitung der eingangs genannten Emulsionen erfolgen, ohne dass sich hiedurch die Verweilzeit des Faulschlammes in dem oder den Faulbehälter(n) nennenswert erhöht.

Die Spaltung bzw. Aufarbeitung von Emulsionen ist somit eine von den Fäulnisbakterien gewissermassen zusätzlich erbrachte Nebenleistung, welche ohne Veränderung des Energiebedarfes der ohnehin durchgeführten Schlammfaulung erbracht werden kann, wobei bei geeigneter Führung des Verfahrens zusätzliche Vorteile erzielbar sind. Hiezu ist es zunächst vorteilhaft, dass die Emulsion bei kontinuierlicher Prozessführung in Mengen von maximal 0,25 kg Öl/kg Schlammtrockensubstanz dem Schlamm bzw. vorgefaultem Schlamm bzw. Schlammwasser zugesetzt wird, bzw. dass bei diskontinuierlicher Verfahrensführung 0̄/,25 bis 1,0 kg Öl/kg Schlammtrockensubstanz dem Schlamm bzw. vorgefaultem Schlamm bzw. Schlammwasser zugesetzt wird. Derartige Mengen an Öl führen zu einer Erhöhung des Kohlenstoffangebotes und bei geeigneter Konditionierbarkeit der Bakterien, welche wie bereits oben erwähnt, abhängig vom Zeitpunkt der Zuführung der Emulsion zu dem Fäulnisprozess ist, kann dieser erhöhte Kohlenstoffgehalt in der Folge zu einer Erhöhung der Gasentwicklung insbesondere der Methanausbeute herangezogen werden. Die Erhöhung des Kohlenstoffgehaltes im Schlamm hat aber andererseits auch zur Folge, dass bei einer Weiterverarbeitung des Faulschlammes durch Verbrennung wesentlich höhere Heizwerte erzielbar sind. Diese Erhöhung des Heizwertes wirkt sich auch dahingehend aus, dass Schlamm mit höherem Wassergehalt, das heisst also, nach einer geringeren Entwässerung bereits verbrannt werden. kann. Auch bei einer gegebenenfalls nachfolgenden Kompostierung haben die in Form der Öle oder Fette eingebrachten Kohlenstoffgehalte eine Verbesserung des Kompostes zur Folge.

Der Fäulnisprozess wird üblicherweise in anaerobem Milieu bei Temperaturen zwischen 20 und 55°C durchgeführt. Im Rahmen der vorliegenden Erfindung ist für eine Erhöhung des Methanausbringens vor allem eine Prozessführung im Temperaturbereich zwischen 30 bis 45°C besonders vorteilhaft.

Die Spaltung der Ölemulsion erfolgt bei vorgefaultem Schlamm in der Regel bereits nach wenigen Minuten und ist vom Schlammzustand und dem Emulsionstyp abhängig. Eine sichere Spaltung und zumindest teilweise Aufarbeitung lässt sich bei einem kontinuierlichen Betrieb des Fäulnisprozesses unter Einhaltung einer Aufenthaltszeit im Fäulnisbehälter von wenigstens drei Tagen gewährleisten.

Um eine möglichst gleichmässige Beladung der Schlammflocken mit dem durch die Spaltung der Emulsion entstehenden Öl oder Fett zu erzielen, ist es von Vorteil, dem Schlamm bzw. Faulschlamm bzw. Schlammwasser eine Emulsion des Typs Öl in Wasser zuzuführen.

Im Hinblick auf eine Verbesserung der Gasausbeuten und damit eine Verbesserung der Energiebilanz kann es vorteilhaft sein, längere Abbauzeiten in Kauf zu nehmen, wofür dem Schlamm bzw. Faulschalmm bzw. Schlammwasser Öl in einer Menge zugeführt wird, welche ein C/N-Verhältnis von >10, vorzugsweise >15, ergibt. Derartige C/N-Verhältnisse erlauben bei geeignet adaptierten Bakterienstämmen eine bedeutende Vergrösserung der Population und eine bedeutende Verbesserung der bei der Fäulnis entstehenden Stoffwechselprodukte, welche im Rahmen der erfindungsgemässen Verfahrensführung bevorzugt zur Entwicklung von Methan führt.

Für den Aufbau der Zellsubstanz ist neben dem für die Zellsubstanz charakteristischen Verhältnis von C : N auch noch der Energieverbrauch für den Aufbau der Zellsubstanz zu berücksichtigen und es muss daher zur Erzielung einer solchen Vermehrung der Zellsubstanz Kohlenstoff zudosiert werden. Diese Zugabe von Kohlenstoff erfolgt in besonders einfacher Weise durch die gleichfalls ein Abfallprodukt darstellenden Ölemulsionen.

Der Zusatz von Kohlenstoff ist in erster Linie bei schlecht faulenden stickstoffreichen Schlämmen, wie sie im landwirtschaftlichen Bereich auftreten, bedeutungsvoll. Gerade in solchen Fällen wird durch die Zufuhr von Ölemulsion eine bedeutende Verbesserung des Fäulnisprozesses erzielt.

Vorzugsweise wird die Emulsion bei Führung des Fäulnisprozesses bei 35°C frühestens nach 10 Tagen, vorzugsweise 14 Tagen, zugefügt. Unter der Annahme einer weitgehenden vollständigen Durchführung des Fäulnisprozesses mit einer Zykluszeit von etwa 28 Tagen bei einer Temperatur von etwa 35°C wird somit nach etwa 10 Tagen eine ungefähr 30%ige Fäulnis des Schlammes, und nach etwa 14 Tagen eine etwa 50%ige Fäulnis des Schlammes erzielt. Die Biozönose eines solchen vorgefaulten Schlammes weist überraschend gute Adaptationsfähigkeit auf und erlaubt Phosphate, Nitrite, Schwefel und kohlenstoffhältige Substanzen besonders gut aufzuarbeiten. Die zugeführte Ölemulsion ist hier der Zufuhr von Nährstoffen zu Bakterien vergleichbar.

Besonders günstige Ergebnisse ergeben sich bei der Verwendung von nitrithältigen und schwermetallhaltigen Emulsionen. Der Fäulnisprozess erlaubt den Abbau der Nitrite, und Schwermetalle können durch die Veraschung des Faulschlammes rückgewonnen werden. Der mit den Spaltprodukten der Emulsionen beladene Schlamm zeichnet sich durch besonders günstige Flockungs- und Entwässerungseigenschaften aus. Die Spaltung der Emulsion kann auch mit frischem Überschussschlamm einer biologischen Abwasserreinigung und mit Schlammwasser von entsprechend adaptiertem Faulschalmm durchgeführt werden.

In der Zeichnung sind schematisch Ausführungsbeispiele für die erfindungsgemässe Verfahrensführung dargestellt. In dieser zeigen Fig. 1 eine erste Variante, bei welcher die Emulsion einem bereits teilweise gefaulten Schlamm zugeführt wird, Fig. 2 einen schematischen, nicht erfindungsgemässen Verfahrensablauf, bei welchem Emulsion ohne Vorfaulung des Schlammes zugesetzt wird, und in Fig. 3 eine zweistufige Faulung mit Emulsionsspaltung. Das Verfahren kann chargenweise oder kontinuierlich durchgeführt werden, wobei als Spaltsubstanzen vorgefaulter Schlamm, Faulschlamm, Schlammgemische aus Frisch- und Faulschlamm und Schlammwasser eingesetzt werden können. Das Verfahren lässt sich als anaerobe Fermentation bezeichnen.

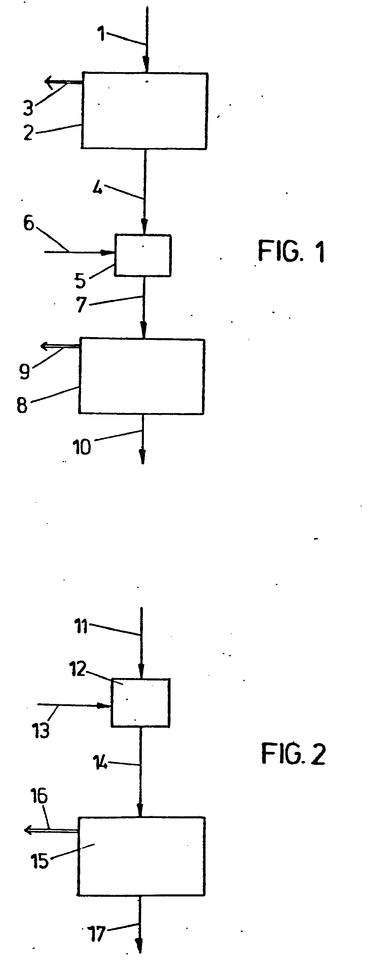

In Fig. 1 wird über ein Leitung 1 Überschussschlamm aus biologischen Kläranlagen einem Faulbehälter 2 zugeführt, in welchem die Schlammfaulung erfolgt. Die Faulgase werden über einen Kamin 3 abgezogen. Aus dem Faulbehälter 2 wird vorgefaulter Schlamm über eine Leitung 4 abgezogen und im Mischer 5 mit der über eine Leitung 6 zugeführten Emulsion vermischt. Das Gemisch wird über eine Leitung 7 in einen weiteren Faulbehälter 8 überführt, aus welchem die Faulgase über einen Kamin 9 abgeführt werden. Über die Leitung 10 wird der Schlamm ausgebracht und kann einer der genannten Weiterverarbeitungen zugeführt werden.

Gemäss Fig. 2 wird der Überschussschlamm einer biologischen Kläranlage über eine Leitung 11 unmittelbar einem Mischer 12 zugeführt, welchem über eine weitere Leitung 13 Eemulsion zugeführt wird. Das Gemisch wird über eine Leitung 14 einem Faulbehälter 15 zugeführt, in welchem die Spaltung der Emulsion gleichzeitig mit der Faulung durchgeführt wird. Aus dem Faulbehälter 15 wird Faulgas wiederum über einen Abzug 16 ausgebracht. Mit 17 ist die Leitung für das Ausbringen des Schlammes gegebenenfalls für eine Weiterverarbeitung bezeichnet.

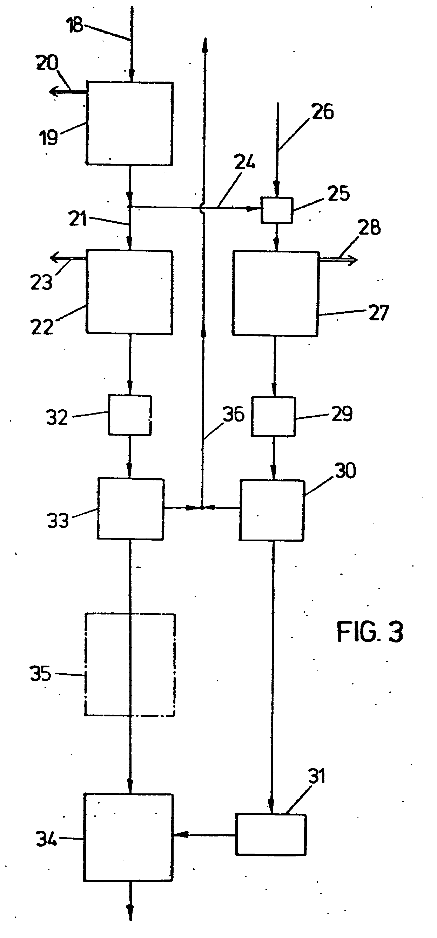

In Fig. 3 wird über eine Leitung 18 Frischschlamm einer in einem ersten Faulbehälter 19 erfolgenden ersten Faulstufe zugeführt, aus welcher Gas über den Kamin 20 abgeführt wird. Der vorgefaulte Schlamm wird über eine Leitung 21 teilweise einer weiteren in einem Faulbehälter 22 durchgeführten zweiten Faulstufe unterworfen, aus welcher Gas wiederum über den Kamin 23 entnommen werden kann. Ein anderer Teil des der ersten Faulstufe entnommenen Schlammes wird über die Leitung 24 einem Mischer 25 zugeführt, welchem über die Leitung 26 Emulsion zufliesst. Das Gemisch aus vorgefaultem Schlamm und Emulsion, welches dem Mischer 25 entnommen wird, wird einem anaeroben Fäulnisprozess in einem Behälter 27 unterworfen, welcher zumindest solange durchgeführt wird, bis die Spaltung der Emulsion weitgehend vollständig ist. Entsprechende Gase werden bei 28 abgeführt und die beladenen Schlammteilchen werden einer mit 29 symbolisch angedeuteten Flockung unterworfen, auf welche eine mit 30 bezeichente Entwässerung bzw. ein Eindicken folgt. Das Produkt dieser Entwässerung 30 kann unmittelbar einer Feuerung 31 zugeführt werden und weist in der Regel Heizwerte von 6000 bis 8000 Kcal/kg Trockensubstanz (25,1 bis 33,5 MJ/kg Trockensubstanz) auf. Diese Feuerung kann zur Trocknung des konventionell weiter verarbeiteten Faulschlammes aus der zweiten Faulstufe 22 verwendet werden, welcher einer mit 32 angedeuteten Flockung und einer mit 33 schematisch angedeuteten Entwässerung unterworfen wurde. Die mit 34 schematisch angedeutete Schlammtrocknung kann gegebenenfalls nach Durchführung einer mit 35 bezeichneten Fermentation oder Kompostierung erfolgen, worauf der getrocknete Schlamm bestimmungsgemäss verwendet werden kann. Das den Entwässerungsstufen 30 und 33 entnommene Wasser kann über eine Leitung 36 neuerlich der Kläranlage oder dem Vorfluter zugeführt werden.

**Patentansprüche:**

1. Verfahren zum Spalten und Aufarbeiten von Emulsionen von Ölen und Fetten, insbesondere von synthetischen Ölen, wie beispielsweise Schneid-, Kühl- und Schmierflüssigkeit und schwefel- bzw. chloridsalzhaltigen Ölen, gegebenenfalls in Gegenwart von Emulgatoren sowie gebrauchten Waschlaugen und Entfettungsbädern, wobei die Emulsionen gemeinsam mit Abwasserschlämmen aufgearbeitet werden, dadurch gekennzeichnet, dass einem Faulschlamm oder Schlammwasser, beispielsweise aus einer biologischen Abwasserreinigung, nach einer ersten Phase des Fäulnisprozesses, in welcher vor allem eine saure Gärung durchgeführt wird und insbesondere organische Säuren und $CO_2$ anfallen, die zu spaltende und aufzuarbeitende Emulsion zugesetzt und diese Mischung einer zweiten Phase des Fäulnisprozesses unter anäeroben Bedingungen unterworfen wird, wobei in der zweiten Phase in einem von der ersten Phase verschiedenen Milieu vor allem Methan entwikkelt wird, und dass die beiden Phasen des Fäulnisprozesses in zwei verschiedenen Faulbehältern durchgeführt werden und die aufzuarbeitende Emulsion dem zweiten Faulbehälter zugeführt wird.

2. Verfahren nach Anspurch 1, dadurch gekennzeichnet, dass die Emulsion bei kontinuierlicher Prozessführung in Mengen von maximal 0,25 kg Öl/kg Schlammtrockensubstanz dem vorgefaulten Schlamm bzw. Schlammwasser zugesetzt wird.

3. Verfahren nach Anspruch 1, dadurch gekennzeichent, dass die Emulsion bei diskontinuierlicher Verfahrensführung in Mengen von 0 /,25 bis 1,0 kg Öl/kg Schlammtrockensubstanz dem Schlamm bzw. vorgefaulten Schlamm bzw. Schlammwasser zugesetzt wird.

4. Verfahren nach einem der Ansprüche 1 bis 3, dadurch gekennzeichnet, dass der Fäulnisprozess in anaerobem Milieu bei Temperaturen zwischen 20 und 55°C, vorzugsweise 30 bis 45°C, geführt wird.

5. Verfahren nach einem der Ansprüche 1, 2 oder 4, dadurch gekennzeichent, dass der Fäulnisprozess in der zweiten Phase bei kontinuierlichem Betrieb unter Einhaltung einer Aufenthaltszeit im Fäulnisbehälter von wenigstens 3 Tagen durchgeführt wird.

6. Verfahren nach einem der Ansprüche 1 bis 5, dadurch gekennzeichnet, dass dem Schlamm bzw. Faulschlamm bzw. Schlammwasser eine Emulsion des Typs Öl in Wasser zugeführt wird.

7. Verfahren nach einem der Ansprüche 1 bis 6, dadurch gekennzeichnet, dass dem Schlamm bzw. Faulschlamm bzw. Schlammwasser Öl in einer Menge zugeführt wird, welche ein C/N-Verhältnis von > 10, vorzugsweise > 15, ergibt.

8. Verfahren nach einem der Ansprüche 1 bis 7, dadurch gekennzeichnet, dass die Emulsion bei Führung des Fäulnisprozesses bei 35°C frühestens nach 10 Tagen, vorzugsweise 14 Tagen, zugefügt wird.

## Claims:

1. A method for demulsifying and reprocessing an emulsion of oils and fats, especially of synthetic oils as cutting coolants or lubricating oils and of sulphurous or chlorite-containing oils, if occasion arises in presence of emulsifying agents or used washing baths or degreasers, the said emulsion being reprocessed together with sewage sludge, the said method being characterized in that the emulsion which is intended to be demulsified and reprocessed is admixed to a digested sludge or sludge water derived e. g. from a biological purification process, said admixing being carried out after a first stage of the putrefaction process effecting primarily an acidic fermentation and generating particularly organic acids plus $CO_2$,– in that the said mixture is left to a second period of the putrefaction process under anaerobic conditions, in surroundings different from those existing during the first stage, and producing primarily methane, – and in that these two periods of the putrefaction process are carried out within two different digestion tanks, the emulsion to be reprocessed being conveyed into the second tank.

2. The method of claim 1, further characterized in that the emulsion is added to the pre-digested sludge or sludge water during a continuously conducted process in a proportion of max. 0,25 kg of oil per 1 kg dry weight of sludge.

3. The method of claim 1, further characterized in that the emulsion is added to the pre-digested sludge or sludge water with a process conducted in a non-continuous way in a proportion of 0,25 to 1.0 kg of oil per 1 kg dry weight of sludge.

4. The method according to any of the claims 1 to 3, characterized in that the putrefaction process is conducted under anaerobic conditions with a temperature between 20 and 55°C, preferably between 30 and 45°C, preferably between 30 and 45°C.

5. The method of claim 1, 2, or 4, characterized in that the said second period of the putrefaction process is carried out in a continuous way, observing a hold-up time in the digestion tank during at least 3 days.

6. The method according to anyone of the preceding claims, characterized in that the emulsion added to the sludge, or digested sludge, or sludge water, resp., consists in an emulsion of the type oil in water.

7. The method according to anyone of the preceding claims, characterized in that the quantity of oil added to the sludge, or digested sludge, or sludge water resp., is determined in such a way that the ratio C to N results to >10:1, preferably >15:1.

8. The method according to anyone of the preceding claims, characterized in that the emulsion is added not earlier than after 10 days, preferably 14 days, with the putrefaction process conducted at about 35°C.

## Revendications

1. Procédé pour la scission et le traitement (régénération) d'émulsions d'huiles et de graisses, notamment d'huiles synthétiques telles que par exemple des fluides de coupe, de refroidissement, de lubrification et des huiles contenant du soufre ou des chlorures, éventuellement en présence d'émulsifiants ainsi que de bains de dégraissage et des solutions de lavage usées, les émulsions étant traitées conjointement avec des boues résiduaires, caractérisé en ce que, à un sapropel ou à des eaux résiduaires provenant par exemple de l'épuration biologique de telles eaux, on ajoute, après une première phase du processus de digestion au cours de laquelle se réalise essentiellement une fermentation acide et se forment en particulier des acides organiques et du $CO_2$, l'émulsion à scinder et à traiter, que ce mélange est soumis à une deuxième phase de processus de digestion dans des conditions anaérobies, du méthane se dégageant principalement au cours de cette deuxième phase dans un milieu différent de celui de la première phase, que les deux phases du processus de digestion sont réalisées dans deux réservoirs de digestion différents et que l'émulsion à traiter est envoyée dans le deuxième réservoir de digestion.

2. Procédé selon la revendication 1, caractérisé en ce que, lors d'une opération en continu, l'émulsion est ajoutée à la boue prédigére ou à l'eau de boue en des quantités maximales de 0,25 kg d'huile/kg de substance (boue sèche).

3. Procédé selon la revendication 1, caractérisé en ce que, lors d'une opération en discontinu, l'émulsion est ajoutée à la boue, ou à la boue prédigérée ou à l'eau de boue à raison de 0,25 à 1 kg d'huile/kg de substance (boue sèche).

4. Procédé selon l'une des revendications 1 à 3, caractérisé en ce que le processus de digestion est conduit en milieu anaérobie à des températures comprises entre 20 et 55°C, de préférence entre 30 et 45°C.

5. Procédé selon l'une des revendications 1, 2 ou 4, caractérisé en ce que, en exploitation en continu, le processus de digestion dans la deuxième phase est conduit en maintenant un temps de séjour d'au moins trois jours dans le réservoir de digestion.

6. Procédé selon l'une des revendications 1 à 5, caractérisé en ce qu'une émulsion du type huile dans eau est introduite dans la boue, ou dans la boue de digestion ou dans l'eau de boue.

7. Procédé selon l'une des revendications 1 à 6, caractérisé en ce qu'on introduit dans la boue, ou dans la boue de digestion ou dans l'eau de boue, de l'huile en une quantité donnant un rapport CIN supérieur à 10, de préférence supérieur à 15.

8. Procédé selon l'une des revendications 1 à 7, caractérisé en ce que dans le processus de digestion à 35°C, l'émulsion est ajoutée au plus tôt après 10 jours, de préférence après 14 jours.

FIG. 1

FIG. 2

FIG. 3